# EUROPEAN PATENT SPECIFICATION

(11) **EP 4 195 858 B1**
(45) Date of publication and mention of the grant of the patent: **18.11.2026**
(21) Application number: 21865543.9
(22) Date of filing: 28.04.2021
(51) Int. Cl.: H04W 74/08

(54) **ACCESS METHOD, SHARED CARRIER BASE STATION, USER EQUIPMENT, AND RECORDING MEDIUM**
ZUGRIFFSVERFAHREN, BASISSTATION MIT GEMEINSAMEM TRÄGER, BENUTZERGERÄT UND AUFZEICHNUNGSMEDIUM
PROCÉDÉ D'ACCÈS, STATION DE BASE À PORTEUSE PARTAGÉE, ÉQUIPEMENT UTILISATEUR ET SUPPORT D'ENREGISTREMENT

(30) Priority: 09.09.2020 CN 202010940314
(43) Date of publication of application: 14.06.2023
(73) Proprietor: China Telecom Corporation Limited, Beijing 100033 (CN)
(72) Inventor: ZHAO, Xiaoyin, Beijing 100033 (CN); XIE, Weiliang, Beijing 100033 (CN)
(74) Representative: Reddie & Grose LLP
(86) International application number: PCT/CN2021/090595
(87) International publication number: WO 2022/052482

(56) References cited:
- EP-A1- 3 528 540
- EP-B1- 3 172 912
- CN-A- 111 385 906
- US-A1- 2019 254 074
- US-A1- 2019 380 128
- US-A1- 2020 015 236
- US-A1- 2020 245 200

## Description

The present application is based on and claims priority to China Patent Application No. 202010940314.5 filed on September 9, 2020.

### TECHNICAL FIELD

The present disclosure relates to the technical field of mobile communication, and in particular to an access method, a shared carrier base station, a user equipment and a recording medium.

### BACKGROUND

The mainstream solution of the 5th generation mobile communication (5G) shared network is that a plurality of operators share a physical base station, the physical base station returning data to a respective core network independently constructed by each operator.

According to a carrier sharing method, the shared network may be divided into two forms: shared carrier and independent carrier. Independent carrier means that, although all the operators share the base station equipment, they can only use own frequencies, that is, the frequencies are not shared; and shared carrier means that, all the operators share all their frequencies which are used in common. For example, two operators share one cell (one carrier), and broadcast two PLMN numbers at the same time.

In the design of introducing uplink and downlink decoupling in the New Radio (NR) of 5G, a plurality of uplink carriers (links) may be configured in a cell, the plurality of uplink comprising uplink (UL) and supplementary uplink (SUL), wherein the SUL may be an existing LTE uplink carrier, thereby effectively enhancing the uplink coverage. SUL is often the existing LTE uplink carrier with a frequency band lower than a frequency band of NR, thereby improving the uplink transmission performance of edge users. In the shared carrier, two operators may use respective unshared uplink carriers as SUL.

US2020245200A1 relates to a communication method and system for converging a 5th-Generation (5G) communication system for supporting higher data rates beyond a 4th-Generation (4G) system with a technology for Internet of Things (IoT). The random access method comprises: measuring, by a user equipment UE, the signal (s) of a target cell; sending, by the UE, a measurement report on the signal of the target cell to a network node corresponding to a serving cell; receiving, by the UE, a handover command including resource configuration information for random access from the network node; and performing, by the UE, random access to the target cell based on the resource configuration information.

US2020015236A1 discloses a method and apparatus. In an example from the perspective of a User Equipment (UE), a random access procedure in a cell controlled by a network node is initiated. A downlink signal is selected from amongst configured downlink signals. A measured Reference Signal Received Power (RSRP) value associated with the downlink signal satisfies a first criterion associated with a first threshold. A measurement result associated with the downlink signal satisfies a second criterion associated with a second threshold. A random access preamble transmission of the random access procedure is performed on a Physical Random Access Channel (PRACH) occasion associated with the downlink signal.

US2019380128A1 discloses a method. A base station distributed unit transmits at least one system information block to a wireless device. The at least one system information block indicates a first public land mobile network (PLMN) and a second PLMN. The base station distributed unit receives a radio resource control message from the wireless device. The radio resource control message indicates at least one PLMN of the first PLMN and the second PLMN. The base station distributed unit determines, by based on the at least one PLMN, at least one base station central unit from : a first base station central unit of the first PLMN; and a second base station central unit of the second PLMN. The base station distributed unit transmits the radio resource control message to the at least one base station central unit.

### SUMMARY

The invention is defined in the appended claims. In the following, a brief summary of the present disclosure is made to provide a basic understanding of some aspects of the present disclosure. However, it should be understood that, this summary is not an exhaustive summary of the present disclosure. Its purpose is only to present some concepts concerning the present disclosure in a simplified form as a foreword to a more detailed description made later.

According to an aspect of the present disclosure, a user equipment access method for a shared carrier base station is provided, wherein a carrier of the shared carrier base station is shared by two or more operators, and a link for uplink transmission of the shared carrier base station comprises an uplink (UL) and a supplementary uplink (SUL), the user equipment access method comprising: the shared carrier base station broadcasting a reference signal receiving power threshold and a parameter value to a user equipment, wherein the reference signal receiving power threshold and the parameter value correspond to an operator to which the user equipment belongs, and the parameter value is for calculating a random access radio network temporary identity; the shared carrier base station broadcasting a random access response scrambled using the random access radio network temporary identity calculated based on the parameter value to the user equipment in response to a random access request from the user equipment; and the shared carrier base station establishing a radio resource control connection with the user equipment in response to a radio resource control (RRC) connection request from the user equipment.

According to an aspect of the present disclosure, a shared carrier base station is provided. The shared carrier base station comprises: a memory having instructions stored thereon; and a processor configured to execute the instructions stored on the memory to perform the above-described method.

According to an aspect of the present disclosure, a shared carrier base station is provided, wherein a carrier of the shared carrier base station is shared by two or more operators, and a link for uplink transmission of the shared carrier base station comprises an uplink (UL) and a supplementary uplink (SUL), and the shared carrier base station comprises a transceiver device and a control device, wherein: the shared carrier base station is configured to broadcast a reference signal receiving power threshold and a parameter value to a user equipment by using the transceiver device, wherein the reference signal receiving power threshold and the parameter value correspond to an operator to which the user equipment belongs, and the parameter value is for calculating a random access radio network temporary identity, the shared carrier base station is configured to receive a random access request from the user equipment through the transceiver device, and broadcast a random access response scrambled using the random access radio network temporary identity calculated by the control device based on the parameter value to the user equipment by using the transceiver device, and the shared carrier base station is configured to establish a radio resource control connection with the user equipment in response to a radio resource control (RRC) connection request from the user equipment.

According to an aspect of the present disclosure, a user equipment access method for a shared carrier base station is provided, wherein a carrier of the shared carrier base station is shared by two or more operators, and a link for uplink transmission of the shared carrier base station comprises an uplink (UL) and a supplementary uplink (SUL), the user equipment access method comprising: a user equipment receiving a reference signal receiving power threshold and a parameter value which are broadcast by the shared carrier base station, wherein the reference signal receiving power threshold and the parameter value correspond to an operator to which the user equipment belongs, and the parameter value is for calculating a random access radio network temporary identity; the user equipment measuring a reference signal receiving power, comparing a reference signal receiving power value measured with the reference signal receiving power threshold received from the shared carrier base station, and determining whether to send a random access request in the uplink or the supplementary uplink according to a comparison result; the user equipment monitoring a random access response from the shared carrier base station, and descrambling the random access response using the random access radio network temporary identity calculated by the parameter value received; and the user equipment establishing a radio resource control connection with the shared carrier base station according to access information descrambled.

According to an aspect of the present disclosure, a user equipment for a shared carrier base station is provided. The user equipment comprises: a memory having instructions stored thereon; and a processor configured to execute the instructions stored on the memory to perform the above-described method.

According to an aspect of the present disclosure, a user equipment for a shared carrier base station is provided, wherein a carrier of the shared carrier base station is shared by two or more operators, and a link for uplink transmission of the shared carrier base station comprises an uplink (UL) and a supplementary uplink (SUL), the user equipment comprising: a transceiver module configured to receive a reference signal receiving power threshold and a parameter value which are broadcast by the shared carrier base station, wherein the reference signal receiving power threshold and the parameter value correspond to an operator to which the user equipment belongs, and the parameter value is for calculating a random access radio network temporary identity; a measuring module configured to measure a reference signal receiving power; a determining module configured to compare a reference signal receiving power value measured with the reference signal receiving power threshold received from the shared carrier base station, and determine whether to send a random access request in the uplink or the supplementary uplink according to a comparison result; a monitoring and descrambling module configured to monitor a random access response from the shared carrier base station, and descramble the random access response using the random access radio network temporary identity calculated by the parameter value received; and a control module configured to establish a radio resource control connection with the shared carrier base station according to access information descrambled.

According to an aspect of the present disclosure, a computer-readable recording medium is provided, wherein the computer-readable recording medium has computer-executable instructions stored thereon that, the computer-executable instructions, when executed by a computer, causing the computer to perform the above-described method.

According to the embodiments of the present disclosure, it is possible to set different SUL access policies for different operators and identify independent random response resources for different operators upon uplink and downlink decoupling of the shared carrier, thus not only improving the flexibility and diversity of carrying of the SUL carriers of different operators, but also ensuring the independence and uniqueness of the random response resources of different operators.

### BRIEF DESCRIPTION OF THE ACCOMPANYING DRAWINGS

The accompanying drawings which constitute a part of this specification, illustrate the embodiments of the present disclosure, and together with this specification, serve to explain the principles of the present disclosure.

The present disclosure may be more explicitly understood from the following detailed description with reference to the accompanying drawings, in which:
Fig. 1 shows a schematic view of a shared carrier base station.
Fig. 2 shows a schematic coverage of a UL/SUL carrier of a user equipment access network in a base station of a single operator.
Fig. 3 shows a schematic coverage of a UL/SUL carrier of a user equipment access network in a shared carrier base station shared by two operators.
Fig. 4 shows a user equipment access method for a shared carrier base station according to some embodiments of the present disclosure.
Fig. 5 shows a schematic block view of a shared carrier base station 3 according to an embodiment of the present disclosure.
Fig. 6 shows a user equipment access method for a shared carrier base station according to some embodiments of the present disclosure.
Fig. 7 shows a schematic block view of a user equipment for a shared carrier base station according to some embodiments of the present disclosure.

### DETAILED DESCRIPTION

Various exemplary embodiments of the present disclosure will now be described in detail with reference to the accompanying drawings. It should be noted that: unless additionally specified, the relative arrangements, numerical expressions and numerical values of the components and steps expounded in these examples do not limit the scope of the present disclosure.

At the same time, it should be understood that, for ease of description, the dimensions of various parts shown in the accompanying drawings are not drawn according to actual proportional relations.

The following descriptions of at least one exemplary embodiment which are in fact merely illustrative, shall by no means serve as any delimitation on the present disclosure as well as its application or use. The techniques, methods, and devices known to a common technical person in the relevant art may not be discussed in detail, but where appropriate, the techniques, methods, and devices should be considered as part of the description.

Among all the examples shown and discussed here, any specific value shall be construed as being merely exemplary, rather than as being restrictive. Thus, other examples in the exemplary embodiments may have different values.

It is to be noted that: similar reference signs and letters present similar items in the following accompanying drawings, and therefore, once an item is defined in one accompanying drawing, it is not necessary to make further discussion on the same in the subsequent accompanying drawings.

An embodiment of the present disclosure provides a user equipment access method for a shared carrier base station, so that it is possible to set different SUL access policies for different operators and identify independent random response resources for different operators upon uplink and downlink decoupling of the shared carrier.

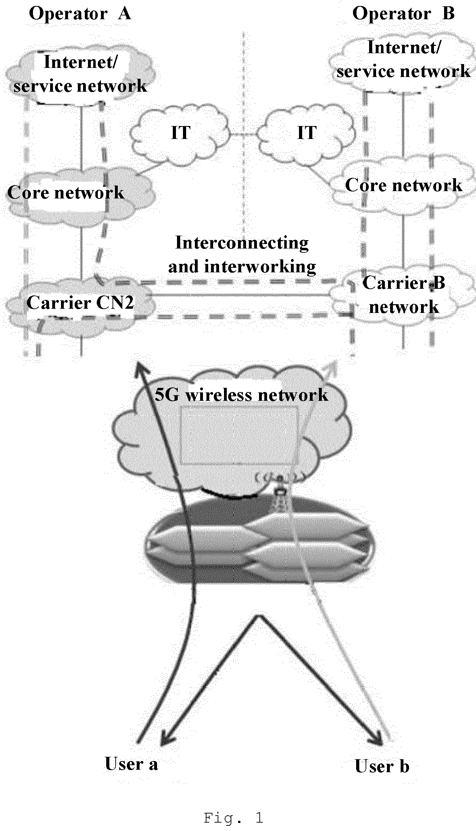

Fig. 1 shows a schematic view of a shared carrier base station.

In Fig. 1, an operator A and an operator B share wireless networks and carriers, and each of the operator A and the operator B constructs a carrier network and a core network independently. A user a of the operator A and a user b of the operator B access the wireless network through the shared carrier of the shared network, wherein the wireless network distinguishes user data of different operators and returns the user data to their respective core networks, by returning the data of the user a to the core network of the operator A and returning the data of the user b to the core network of the operator B.

In the radio access network sharing (RAN Sharing) technology with the 3GPP (3rd Generation Partnership Project) standard, two or more operators may share the radio access network, and share the radio access network equipment comprising baseband, radio frequency and antenna. Two or more operators may use different carriers under the same base station respectively, or share the carrier of the base station. When two or more operators share the same carrier, the base station may inform mobile network IDs of a plurality of operators, that is, PLMN (Public Land Mobile Network) ID, in a broadcast message SIB1 (System Information Block). UE (User Equipment) receives the broadcast message SIB1 sent by the base station, selects a network according to the PLMN ID in the broadcast message, and reports a PLMN ID (PLMN identifier) of a selected network to the base station.

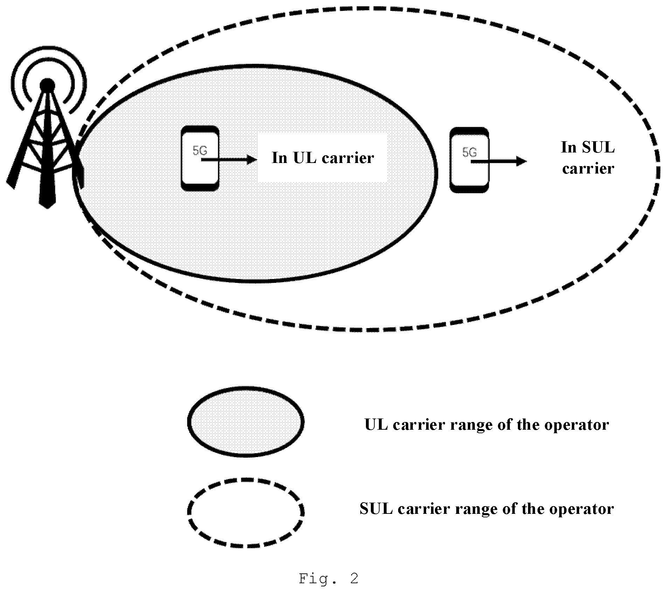

Fig. 2 shows a schematic coverage of a UL/SUL carrier of a user equipment access network in a base station of a single operator.

The 5G standard New Radio NR operates within a wide frequency range from below 1 GHz up to 100 GHz, which will be a problem in a high-frequency coverage. One method to alleviate such condition is to introduce a supplementary uplink (SUL) carrier, which is mainly motivated by improving the uplink coverage of NR deployed in a relatively high-frequency band. The SUL carrier is deployed in a low-frequency area, for example, in a LTE frequency band. In this way, the uplink coverage of the NR band can be comparable to the uplink coverage of LTE. The SUL carrier and the NR UL/DL (downlink) carrier are in a same cell. In this case, the SUL carrier is more like belonging to a separate UL configuration. UE may maintain two UL configurations, but UE may keep only one UL configuration active. Fig. 2 shows a coverage difference between the NR UL carrier and the SUL carrier. Compared with the SUL carrier, the NR UL carrier covers a smaller range.

In Fig. 2, the coverage of the operator's UL carrier is indicated by a solid line, and the coverage of the operator's SUL carrier is indicated by a dashed line. Since the SUL carrier is deployed in a lower frequency area, the coverage of the SUL carrier is larger than the coverage of the UL carrier.

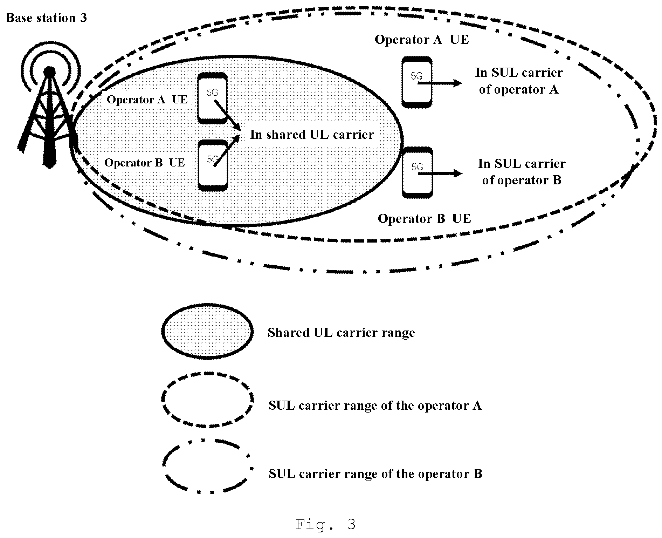

Fig. 3 shows a schematic coverage of a exemplary UL/SUL carrier of a user equipment access network in a shared carrier base station shared by two operators.

Fig. 3 shows an example in which a base station is shared by two operators (i.e., the operator A and the operator B). In Fig. 3, a coverage of a UL carrier of a shared carrier base station 3 is indicated by a solid line, a coverage of a SUL carrier of the operator A is indicated by a dashed line, and a coverage of a SUL carrier of the operator B is indicated by a double dot dash line. Since the SUL carriers of the operator A and the operator B are both deployed in an area with a frequency lower than a frequency of the shared UL carrier, the coverage of the SUL carriers of the operator A and the operator B is larger than the coverage of the UL carrier.

Under the shared carrier, SULs of different operators use respective unshared carriers, and the SUL carriers of different operators have different coverages, and the initial services are also different. Since the SUL carriers of the two operators which are not shared carriers and pertain to different frequency bands at times have different coverages and often have other initial services in this frequency band, it is necessary to set different access policies at an initial access stage of SUL. In a random access response stage, the users of different operators monitor DCI format 1_0 scrambled using RA-RNTI sent by the base station. A calculation formula of RA-RNTI in the current protocol can only distinguish the SUL carriers and the non-SUL carriers, rather than the carriers of different operators in the SUL carriers.

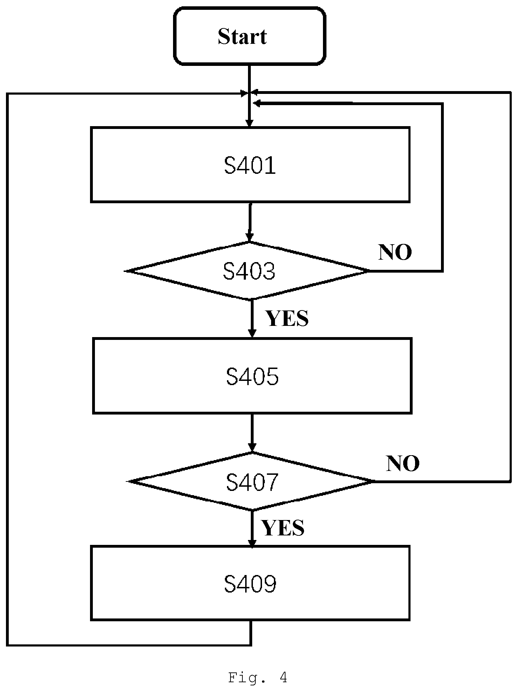

Fig. 4 shows a user equipment access method for a shared carrier base station according to some embodiments of the present disclosure.

A carrier of the shared carrier base station 3 is shared by two or more operators, and a link for uplink transmission of the shared carrier base station comprises an uplink UL and a supplementary uplink SUL.

In step S401, the shared carrier base station 3 broadcasts a reference signal receiving power (i.e., RSRP) threshold and a parameter value ul_plmn_id to a user equipment UE, wherein the reference signal receiving power threshold and the parameter value correspond to an operator to which the user equipment belongs (i.e., to which operator the user equipment UE belongs, in some embodiments, whether the user equipment UE belongs to the operator A or the operator B), and the parameter value is for calculating a random access radio network temporary identity (i.e., RA-RNTI). The reference signal receiving power RSRP threshold is a threshold for the user equipment UE to determine whether to perform UL or SUL access. In some embodiments, in a case where the base station is shared by two operators, a user equipment UE_A of the operator A broadcasts a RSRP_A for the user equipment UE_A to determine whether to perform UL or SUL access by itself and a parameter value ul_plmn_id_A for calculating the random access radio network temporary identity RA-RNTI; a user equipment UE_B of the operator B broadcasts a RSRP_B for the user equipment UE_B to determine whether to perform UL or SUL access by itself and a parameter value ul_plmn_id_B for calculating the random access radio network temporary identity RA-RNTI.

In step S403, the shared carrier base station 3 determines whether a random access request is received from the user equipment UE. In a case where a judgment result is no, it returns to the step S401. In a case where the judgment result is yes, it proceeds to step S405.

In step S405, the shared carrier base station 3 broadcasts a random access response scrambled using the random access radio network temporary identity RA-RNTI calculated based on the parameter value ul_plmn_id to the user equipment UE in response to a random access request from the user equipment UE.

Next, in step S407, it is determined whether a radio resource control (RRC) connection request is received from the user equipment UE. In a case where a judgment result is no, it returns to the step S401. In a case where the judgment result is yes, it proceeds to step S409.

In step S409, the shared carrier base station 3 establishes a radio resource control connection with the user equipment UE in response to the RRC connection request from the user equipment UE, thereby completing the random access process of the user equipment UE.

A sequence of step S401 and step S405 is shown in Fig. 4, but this is not limited thereto, and step S401 and step S405 may also be performed independently. For example, step S401 may be performed in a specified cycle, and step S405 may be triggered by the shared carrier base station 3 receiving a random access request from the user equipment UE.

In some embodiments, the shared carrier base station 3 also broadcasts an instruction to inform the user equipment UE to measure a reference signal receiving power in step S402. Step S402 may be performed in a specified cycle or after step S401.

In some embodiments, the operator to which the user equipment UE belongs is identified by a PLMN identifier, and the shared carrier base station 3 broadcasts the reference signal receiving power RSRP threshold and the parameter value ul_plmn_id together with the PLMN identifier corresponding to the reference signal receiving power threshold and the parameter value to the user equipment UE. For example, a data packet containing RSRP_A, a parameter value ul_plmn_id_A and a corresponding PLMN identifier plmn_A is broadcast to the user equipment UE, and a data packet containing RSRP_B, a parameter value ul_plmn_id_B and a corresponding PLMN identifier plmn_B is broadcast to the user equipment UE. It should be understood that the method for determining the belonging of the user equipment UE to the operator is not limited thereto, and any other method can be used to determine the belonging of the user equipment UE.

In some embodiments, in a case where the parameter value for calculating the random access radio network temporary identity is set as ul_plmn_id, the random access radio network temporary identity RA-RNTI is obtained by a following formula: 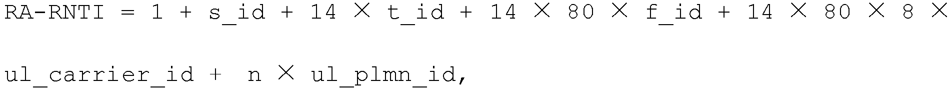 RA-RNTI = 1 + s_id + 14 × t_id + 14 × 80 × f_id + 14 × 80 × 8 × ul_carrier_id + n × ul_plmn_id, where s_id is an index of a first orthogonal frequency division multiplexing (OFDM) symbol of a physical random access channel (PRACH) ; t_id is an index of a first time slot of the physical random access channel in a system frame; f_id is an index of a frequency domain in which the physical random access channel is located; ul_carrier_id is 0 when the user equipment UE selects the uplink, and 1 when the user equipment UE selects the supplementary uplink; n is a positive integer, ul_plmn_id is a non-negative integer, and ul_plmn_ids corresponding to different operators are different from each other, where 0≤s_id<14, 0≤t_id<80, and 0≤f_id<8. In some embodiments, 1 bit or 2 bits can be allocated to the parameter ul_plmn_id. In a case where 1 bit is allocated to the parameter ul_plmn_id, two operators can be accommodated, i.e., 0 and 1 respectively; and in a case where 2 bits are allocated to the parameter ul_plmn_id, four operators can be accommodated, i.e., 00, 01, 10 and 11 respectively.

In some embodiments of the present disclosure, a shared carrier base station is provided. The shared carrier base station comprises: a memory having instructions stored thereon; and a processor configured to execute the instructions stored on the memory to perform the above-described user equipment access method.

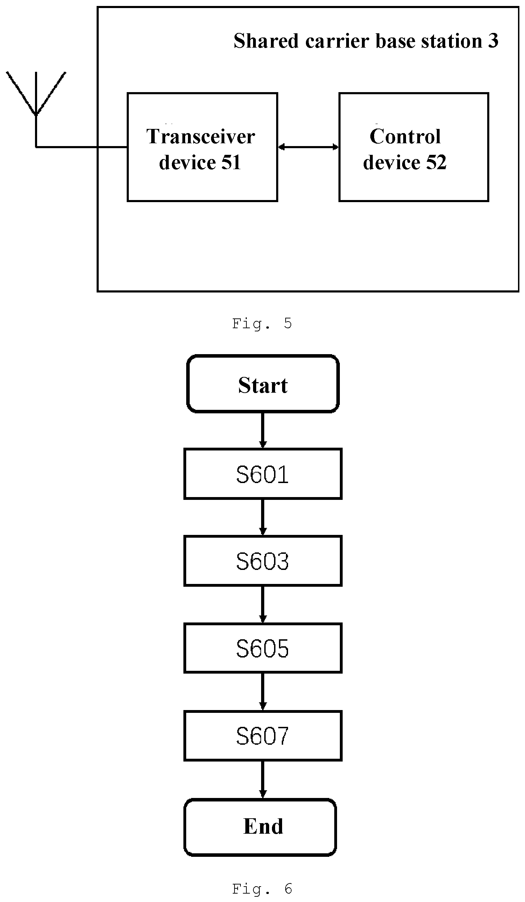

Fig. 5 shows a schematic block view of a shared carrier base station 3 according to an embodiment of the present disclosure.

A carrier of the shared carrier base station 3 is shared by two or more operators, and a link for uplink transmission of the shared carrier base station 3 comprises an uplink UL and a supplementary uplink SUL. The shared carrier base station 3 comprises a transceiver device 51 and a control device 52. The transceiver device 51 performs baseband and radio frequency processing on the signal, and then sends the signal to an antenna through a radio frequency feeder for transmission.

The shared carrier base station 3 broadcasts a reference signal receiving power (i.e., RSRP) threshold and a parameter value ul_plmn_id to a user equipment UE by using the transceiver device 51, wherein the reference signal receiving power threshold and the parameter value correspond to an operator to which the user equipment UE belongs, and the parameter value ul_plmn_id is for calculating a random access radio network temporary identity (i.e., RA-RNTI).

The shared carrier base station 3 receives a random access request from the user equipment UE through the transceiver device 51, and broadcasts a random access response scrambled using the random access radio network temporary identity RA-RNTI calculated by the control device 52 based on the parameter value ul_plmn_id to the user equipment UE by using the transceiver device 51.

The shared carrier base station 3 establishes a radio resource control connection with the user equipment UE in response to a radio resource control (RRC) connection request from the user equipment UE.

In some embodiments, the shared carrier base station 3 also informs the user equipment UE to measure a reference signal receiving power through the transceiver device 51.

In some embodiments, the operator to which the user equipment UE belongs is identified by a PLMN identifier, and the shared carrier base station 3 broadcasts the reference signal receiving power RSRP threshold and the parameter value ul_plmn_id together with the PLMN identifier corresponding to the reference signal receiving power threshold and the parameter value to the user equipment UE through the transceiver device 51. For example, a data packet containing RSRP_A, a parameter value ul_plmn_id_A and a corresponding PLMN identifier plmn_A is broadcast to the user equipment UE, and a data packet containing RSRP_B, a parameter value ul_plmn_id_B and a corresponding PLMN identifier plmn_B is broadcast to the user equipment UE. The method for determining the belonging of the user equipment UE to the operator is not limited thereto, and any other method can be used to determine the belonging of the user equipment UE.

In some embodiments, in a case where the parameter value for calculating the random access radio network temporary identity is set as ul_plmn_id, the random access radio network temporary identity RA-RNTI is obtained by a following formula: 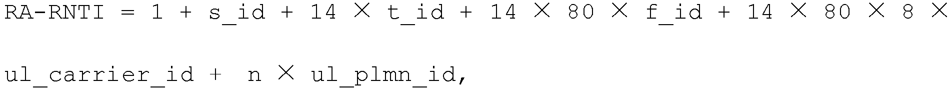 RA-RNTI = 1 + s_id + 14 × t_id + 14 × 80 × f_id + 14 × 80 × 8 × ul_carrier_id + n × ul_plmn_id, where s_id is an index of a first orthogonal frequency division multiplexing (OFDM) symbol of a physical random access channel (PRACH) ; t_id is an index of a first time slot of the physical random access channel in a system frame; f_id is an index of a frequency domain in which the physical random access channel is located; ul_carrier_id is 0 when the user equipment UE selects the uplink, and 1 when the user equipment UE selects the supplementary uplink; n is a positive integer, ul_plmn_id is a non-negative integer, and ul_plmn_ids corresponding to different operators are different from each other, where 0≤s_id<14, 0≤t_id<80, and O≤f_id<8. In some embodiments, 1 bit or 2 bits can be allocated to the parameter ul_plmn_id. In a case where 1 bit is allocated to the parameter ul_plmn_id, two operators can be accommodated, i.e., 0 and 1 respectively; and in a case where 2 bits are allocated to the parameter ul_plmn_id, four operators can be accommodated, i.e., 00, 01, 10 and 11 respectively.

Fig. 6 shows a user equipment access method for a shared carrier base station according to some embodiments of the present disclosure. A carrier of the shared carrier base station 3 is shared by two or more operators, and a link for uplink transmission of the shared carrier base station 3 comprises an uplink UL and a supplementary uplink SUL.

As shown in Fig. 6, in step S601, the user equipment UE receives a reference signal receiving power RSRP threshold and a parameter value ul_plmn_id which are broadcast by the shared carrier base station 3, wherein the reference signal receiving power threshold and the parameter value correspond to an operator to which the user equipment belongs, and the parameter value ul_plmn_id is for calculating a random access radio network temporary identity RA-RNTI. The reference signal receiving power RSRP threshold is a threshold for the user equipment UE to determine whether to perform UL or SUL access. In some embodiments, in a case where the user equipment UE is the user equipment UE_A of the operator A, the user equipment UE_A only receives a RSRP_A for the user equipment UE_A to determine whether to perform UL or SUL access and a parameter value ul_plmn_id_A for calculating the random access radio network temporary identity RA-RNTI, which are broadcast by the shared carrier base station 3; and in a case where the user equipment UE is the user equipment UE_B of the operator B, the user equipment UE_B only receives a RSRP_B for the user equipment UE_B to determine whether to perform UL or SUL access and a parameter value ul_plmn_id_B for calculating the random access radio network temporary identity RA-RNTI, which are broadcast by the shared carrier base station 3.

Next, in step S603, the user equipment UE measures a reference signal receiving power, compares a reference signal receiving power value measured with the reference signal receiving power RSRP threshold received from the shared carrier base station 3, and determine whether to send a random access request in the uplink or the supplementary uplink according to a comparison result.

Next, in step S605, the user equipment UE monitors a random access response from the shared carrier base station 3, and descrambles the random access response received using the random access radio network temporary identity RA-RNTI calculated by the parameter value ul_plmn_id received.

Next, in step S607, the user equipment UE establishes a radio resource control connection with the shared carrier base station 3 according to access information descrambled, thereby completing the random access process of the user equipment UE.

In some embodiments, the user equipment UE measures the reference signal receiving power in response to an instruction from the shared carrier base station 3. In other embodiments, the user equipment UE measures the reference signal receiving power in response to receiving the reference signal receiving power RSRP threshold and the parameter value ul_plmn_id which are broadcast by the shared carrier base station 3.

In some embodiments, the operator to which the user equipment UE belongs is identified by a PLMN identifier, and the user equipment UE receives the reference signal receiving power RSRP threshold and the parameter value ul_plmn_id which correspond to own PLMN identifier from the shared carrier base station 3.

In some embodiments, the user equipment sends the random access request in the uplink UL in a case where the reference signal receiving power value measured is greater than or equal to the reference signal receiving power RSRP threshold received from the shared carrier base station 3; and the user equipment UE sends the random access request in the supplementary uplink SUL in a case where the reference signal receiving power value measured is less than the reference signal receiving power RSRP threshold received from the shared carrier base station 3.

In some embodiments, in a case where the parameter value for calculating the random access radio network temporary identity is set as ul_plmn_id, the random access radio network temporary identity RA-RNTI is obtained by a following formula: 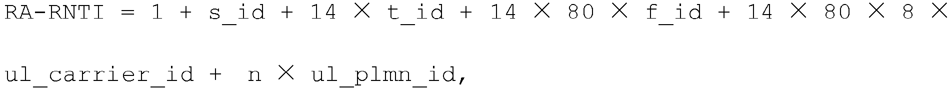 RA-RNTI = 1 + s_id + 14 × t_id + 14 × 80 × f_id + 14 × 80 × 8 × ul_carrier_id + n × ul_plmn_id, where s_id is an index of a first orthogonal frequency division multiplexing (OFDM) symbol of a physical random access channel (PRACH) ; t_id is an index of a first time slot of the physical random access channel in a system frame; f_id is an index of a frequency domain in which the physical random access channel is located; ul_carrier_id is 0 when the user equipment UE selects the uplink, and 1 when the user equipment UE selects the supplementary uplink; n is a positive integer, ul_plmn_id is a non-negative integer, and ul_plmn_ids corresponding to different operators are different from each other, where 0≤s_id<14, 0≤t_id<80, and 0≤f_id<8.

In some embodiments of the present disclosure, a user equipment for a shared carrier base station is provided. The user equipment comprises: a memory having instructions stored thereon; and a processor configured to execute the instructions stored on the memory to perform the above-described user equipment access method.

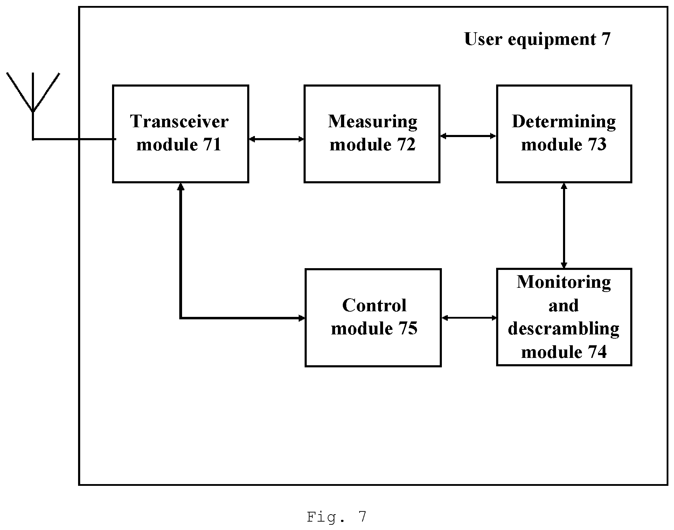

Fig. 7 shows a schematic block view of a user equipment for a shared carrier base station according to some embodiments of the present disclosure. A carrier of the shared carrier base station 3 is shared by two or more operators, and a link for uplink transmission of the shared carrier base station 3 comprises an uplink UL and a supplementary uplink SUL.

The user equipment 7 comprises a transceiver module 71, a measuring module 72, a determining module 73, a monitoring and descrambling module 74 and a control module 75.

The transceiver module 71 receives a reference signal receiving power RSRP threshold and a parameter value which are broadcast by the shared carrier base station 3, wherein the reference signal receiving power threshold and the parameter value correspond to an operator to which the user equipment 7 (that is, UE) belongs, and the parameter value is for calculating a random access radio network temporary identity RA-RNTI. The measuring module 72 measures a reference signal receiving power. The determining module 73 compares a reference signal receiving power value measured with the reference signal receiving power RSRP threshold received from the shared carrier base station 3, and determines whether to send a random access request in the uplink or the supplementary uplink according to a comparison result. The monitoring and descrambling module 74 monitors a random access response from the shared carrier base station 3, and descrambles the random access response using the random access radio network temporary identity RA-RNTI calculated by the parameter value ul_plmn_id received. The control module 75 establishes a radio resource control connection with the shared carrier base station 3 according to access information descrambled.

In some embodiments, the measuring module 72 of the user equipment 7 measures the reference signal receiving power in response to an instruction received by the transceiver module 71 from the shared carrier base station 3. In other embodiments, the measuring module 72 of the user equipment 7 measures the reference signal receiving power in response to receiving the reference signal receiving power RSRP threshold and the parameter value ul_plmn_id which are broadcast by the shared carrier base station 3.

In some embodiments, the operator to which the user equipment 7 belongs is identified by a PLMN identifier, and the user equipment 7 receives the reference signal receiving power RSRP threshold and the parameter value ul_plmn_id which correspond to own PLMN identifier from the shared carrier base station 3.

In some embodiments, the user equipment 7 sends the random access request in the uplink UL in a case where the reference signal receiving power value measured is greater than or equal to the reference signal receiving power RSRP threshold received from the shared carrier base station 3; and the user equipment 7 sends the random access request in the supplementary uplink SUL in a case where the reference signal receiving power value measured is less than the reference signal receiving power RSRP threshold received from the shared carrier base station.

In some embodiments, in a case where the parameter value for calculating the random access radio network temporary identity is set as ul_plmn_id, the random access radio network temporary identity RA-RNTI is obtained by a following formula: 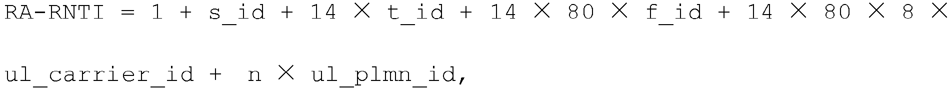 RA-RNTI = 1 + s_id + 14 × t_id + 14 × 80 × f_id + 14 × 80 × 8 × ul_carrier_id + n × ul_plmn_id, where s_id is an index of a first orthogonal frequency division multiplexing (OFDM) symbol of a physical random access channel (PRACH) ; t_id is an index of a first time slot of the physical random access channel in a system frame; f_id is an index of a frequency domain in which the physical random access channel is located; ul_carrier_id is 0 when the user equipment UE selects the uplink, and 1 when the user equipment UE selects the supplementary uplink; n is a positive integer, ul_plmn_id is a non-negative integer, and ul_plmn_ids corresponding to different operators are different from each other, where 0≤s_id<14, 0≤t_id<80, and 0≤f_id<8.

According to the embodiments of the present disclosure, it can be applied to the case of decoupling the 5G shared carrier uplink and downlink of different operators, where each of two operators uses their respective unshared uplink carriers as supplementary uplink carriers, thereby effectively improving the uplink coverage.

According to the embodiments of the present disclosure, it is possible to set different SUL access policies for different operators and identify independent random response resources for different operators upon uplink and downlink decoupling of the shared carrier, thus not only improving the flexibility and diversity of carrying of the SUL carriers of different operators, but also ensuring the independence and uniqueness of the random response resources of different operators.

It should be understood that, the reference to "an embodiment" or similar expressions in this specification means that a particular feature, structure, or characteristic described in conjunction with this embodiment is comprised in at least one specific embodiment of the present disclosure. Therefore, in this specification, the presence of "in the embodiments of the present disclosure" and similar expressions does not necessarily mean the same embodiment.

Those skilled in the art should know that, the present disclosure is implemented as a system, an apparatus, a method or a computer-readable medium (e.g., a non-transitory storage medium) as a computer program product. Therefore, the present disclosure may be implemented in various forms, for example an entirely hardware embodiment, an entirely software embodiment (comprising firmware, resident software, microprogram code, or the like), or in the embodiments of software and hardware, which will be referred to as a "circuit", "module" or "system" hereinafter. Furthermore, the present disclosure may also be implemented as a computer program product in any tangible medium form, which has computer usable program codes stored thereon.

The related descriptions of the present disclosure are specified with reference to the flowcharts and/or block views of the system, device, method and computer program product according to specific embodiments of the present disclosure. It may be understood that each block in each flowchart and/or block view, and any combination of blocks in the flowchart and/or block view, may be implemented by using computer program instructions. These computer program instructions may be executed by a machine consisting of a processor of a general-purpose computer or a special computer or other programmable data processing devices, and the instructions are processed by the computer or other programmable data processing devices to implement the functions or operations specified in the flowcharts and/or block views.

The flowcharts and block views of the architectures, functions and operations that may be implemented by the systems, devices, methods and computer program products according to various embodiments of the present disclosure are shown in the accompanying drawings. Therefore, each block in the flowchart or block view may represent a module, a section, or some of the program codes, which comprise one or more executable instructions to implement specified logical functions. It should also be noted that, in some other embodiments, the functions described in the blocks may be performed not according to the sequences shown in the accompanying drawings. For example, two connected blocks as shown may actually be performed at the same time, or performed according to in the reverse sequence of the icons according to the functions involved in some cases. In addition, it should be also noted that, the block of each block view and/or flowchart, and a combination of blocks in the block view and/or flowchart, may be implemented by a system based on a special hardware, or by a combination of a special hardware and computer instructions, so as to perform specific functions or operations.

The embodiments of the present disclosure have been described above, and the above description is exemplary, not exhaustive, and is not limited to the embodiments as disclosed. Many modifications and changes to the illustrated embodiments will be apparent to those skilled in the art. The selection of the terms used herein is intended to best explain the principles of various embodiments, practical applications or technical improvements to the market technology, or to enable others skilled in the art to understand the embodiments disclosed herein.

## Claims

1. A user equipment access method for a shared carrier base station, wherein a carrier of the shared carrier base station (3) is shared by two or more operators, and a link for uplink transmission of the shared carrier base station comprises an uplink, UL, and a supplementary uplink, SUL, the user equipment access method comprising:
the shared carrier base station broadcasting a reference signal receiving power threshold and a parameter value to a user equipment, wherein the reference signal receiving power threshold and the parameter value correspond to an operator to which the user equipment belongs, and the parameter value is for calculating a random access radio network temporary identity (S401);
the shared carrier base station broadcasting a random access response scrambled using the random access radio network temporary identity calculated based on the parameter value to the user equipment in response to a random access request from the user equipment (S405); and
the shared carrier base station establishing a radio resource control connection with the user equipment in response to a radio resource control, RRC, connection request from the user equipment (S409) .

2. The user equipment access method according to claim 1, wherein the shared carrier base station (3) informs the user equipment to measure a reference signal receiving power.

3. The user equipment access method according to claim 1, wherein the operator to which the user equipment belongs is identified by a public land mobile network, PLMN, identifier, and the shared carrier base station broadcasts the reference signal receiving power threshold and the parameter value together with the PLMN identifier corresponding to the reference signal receiving power threshold and the parameter value to the user equipment.

4. The user equipment access method according to claim 1, wherein:
in a case where the parameter value for calculating the random access radio network temporary identity is set as ul_plmn_id, the random access radio network temporary identity, RA-RNTI, is obtained by a following formula: 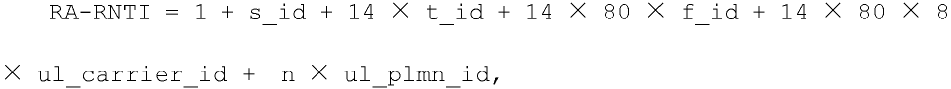 RA-RNTI = 1 + s_id + 14 × t_id + 14 × 80 × f_id + 14 × 80 × 8 × ul_carrier_id + n × ul_plmn_id,
where s_id is an index of a first orthogonal frequency division multiplexing symbol of a physical random access channel; t_id is an index of a first time slot of the physical random access channel in a system frame; f_id is an index of a frequency domain in which the physical random access channel is located; ul_carrier_id is 0 when the user equipment selects the uplink, and 1 when the user equipment selects the supplementary uplink; n is a positive integer, ul_plmn_id is a non-negative integer, and ul_plmn_ids corresponding to different operators are different from each other, where 0≤s_id<14, 0≤t_id<80, and 0≤f_id<8.

5. A shared carrier base station, wherein a carrier of the shared carrier base station is shared by two or more operators, and a link for uplink transmission of the shared carrier base station comprises an uplink, UL, and a supplementary uplink, SUL, the shared carrier base station comprising:
a memory having instructions stored thereon; and
a processor configured to execute the instructions stored on the memory to cause the shared carrier base station to:
broadcast a reference signal receiving power threshold and a parameter value to a user equipment, wherein the reference signal receiving power threshold and the parameter value correspond to an operator to which the user equipment belongs, and the parameter value is for calculating a random access radio network temporary identity;
broadcast a random access response scrambled using the random access radio network temporary identity calculated based on the parameter value to the user equipment in response to a random access request from the user equipment; and
establish a radio resource control connection with the user equipment in response to a radio resource control, RRC, connection request from the user equipment.

6. The shared carrier base station according to claim 5, wherein the processor is configured to execute the instructions stored on the memory to cause the shared carrier base station to inform the user equipment to measure a reference signal receiving power.

7. The shared carrier base station according to claim 5, wherein:
the operator to which the user equipment belongs is identified by a public land mobile network, PLMN, identifier, and
the processor is configured to execute the instructions stored on the memory to cause the shared carrier base station to broadcast the reference signal receiving power threshold and the parameter value together with the PLMN identifier corresponding to the reference signal receiving power threshold and the parameter value to the user equipment.

8. The shared carrier base station according to claim 5, wherein:
in a case where the parameter value for calculating the random access radio network temporary identity is set as ul_plmn_id, the random access radio network temporary identity, RA-RNTI, is obtained by a following formula: 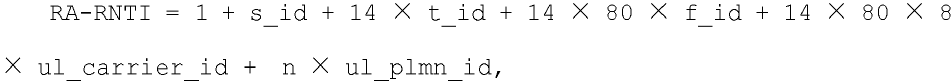 RA-RNTI = 1 + s_id + 14 × t_id + 14 × 80 × f_id + 14 × 80 × 8 × ul_carrier_id + n × ul_plmn_id,
where s_id is an index of a first orthogonal frequency division multiplexing symbol of a physical random access channel; t_id is an index of a first time slot of the physical random access channel in a system frame; f_id is an index of a frequency domain in which the physical random access channel is located; ul_carrier_id is 0 when the user equipment selects the uplink, and 1 when the user equipment selects the supplementary uplink; n is a positive integer, ul_plmn_id is a non-negative integer, and ul_plmn_ids corresponding to different operators are different from each other, where 0≤s_id<14, 0≤t_id<80, and 0≤f_id<8.

9. A user equipment access method for a shared carrier base station, wherein a carrier of the shared carrier base station (3) is shared by two or more operators, and a link for uplink transmission of the shared carrier base station comprises an uplink, UL, and a supplementary uplink,SUL, the user equipment access method comprising:
a user equipment receiving a reference signal receiving power threshold and a parameter value which are broadcast by the shared carrier base station (3), wherein the reference signal receiving power threshold and the parameter value correspond to an operator to which the user equipment belongs, and the parameter value is for calculating a random access radio network temporary identity (S601);
the user equipment measuring a reference signal receiving power, comparing a reference signal receiving power value measured with the reference signal receiving power threshold received from the shared carrier base station, and determining whether to send a random access request in the uplink or the supplementary uplink according to a comparison result (S603);
the user equipment monitoring a random access response from the shared carrier base station, and descrambling the random access response using the random access radio network temporary identity calculated by the parameter value received (S605); and
the user equipment establishing a radio resource control connection with the shared carrier base station according to access information descrambled (S607).

10. The user equipment access method according to claim 9, wherein:
the user equipment measures the reference signal receiving power in response to an instruction from the shared carrier base station (3); or
the user equipment measures the reference signal receiving power in response to receiving the reference signal receiving power threshold and the parameter value which are broadcast by the shared carrier base station (3).

11. The user equipment access method according to claim 9, wherein:
the operator to which the user equipment belongs is identified by a public land mobile network, PLMN, identifier, and the user equipment receives the reference signal receiving power threshold and the parameter value which correspond to own PLMN identifier from the shared carrier base station; or
the user equipment sends the random access request in the uplink in a case where the reference signal receiving power value measured is greater than or equal to the reference signal receiving power threshold received from the shared carrier base station; and the user equipment sends the random access request in the supplementary uplink in a case where the reference signal receiving power value measured is less than the reference signal receiving power threshold received from the shared carrier base station; or
in a case where the parameter value for calculating the random access radio network temporary identity is set as ul_plmn_id, the random access radio network temporary identity, RA-RNTI, is obtained by a following formula: 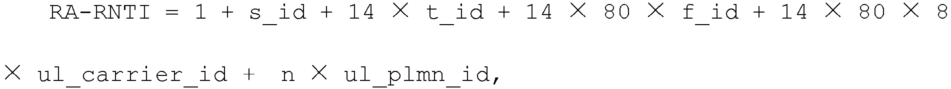 RA-RNTI = 1 + s_id + 14 × t_id + 14 × 80 × f_id + 14 × 80 × 8 × ul_carrier_id + n × ul_plmn_id,
where s_id is an index of a first orthogonal frequency division multiplexing symbol of a physical random access channel; t_id is an index of a first time slot of the physical random access channel in a system frame; f_id is an index of a frequency domain in which the physical random access channel is located; ul_carrier_id is 0 when the user equipment selects the uplink, and 1 when the user equipment selects the supplementary uplink; n is a positive integer, ul_plmn_id is a non-negative integer, and ul_plmn_ids corresponding to different operators are different from each other, where 0≤s_id<14, 0≤t_id<80, and 0≤f_id<8.

12. A user equipment for a shared carrier base station, wherein a carrier of the shared carrier base station is shared by two or more operators, and a link for uplink transmission of the shared carrier base station comprises an uplink, UL, and a supplementary uplink, SUL, comprising:
a memory having instructions stored thereon; and
a processor configured to execute the instructions stored on the memory to cause the user equipment to:
receive a reference signal receiving power threshold and a parameter value which are broadcast by the shared carrier base station, wherein the reference signal receiving power threshold and the parameter value correspond to an operator to which the user equipment belongs, and the parameter value is for calculating a random access radio network temporary identity;
measure a reference signal receiving power, compare a reference signal receiving power value measured with the reference signal receiving power threshold received from the shared carrier base station, and determine whether to send a random access request in the uplink or the supplementary uplink according to a comparison result;
monitor a random access response from the shared carrier base station, and descramble the random access response using the random access radio network temporary identity calculated by the parameter value received; and
establish a radio resource control connection with the shared carrier base station according to access information descrambled.

13. The user equipment according to claim 12, wherein the processor is configured to execute the instructions stored on the memory to cause the user equipment to:
measure the reference signal receiving power in response to an instruction from the shared carrier base station; or
measure the reference signal receiving power in response to receiving the reference signal receiving power threshold and the parameter value which are broadcast by the shared carrier base station.

14. The user equipment according to claim 12, wherein:
the operator to which the user equipment belongs is identified by a public land mobile network, PLMN, identifier, and the processor is configured to execute the instructions stored on the memory to cause the user equipment to receive the reference signal receiving power threshold and the parameter value which correspond to own PLMN identifier from the shared carrier base station; or
the processor is configured to execute the instructions stored on the memory to cause the user equipment to: send the random access request in the uplink in a case where the reference signal receiving power value measured is greater than or equal to the reference signal receiving power threshold received from the shared carrier base station, and send the random access request in the supplementary uplink in a case where the reference signal receiving power value measured is less than the reference signal receiving power threshold received from the shared carrier base station; or
in a case where the parameter value for calculating the random access radio network temporary identity is set as ul_plmn_id, the random access radio network temporary identity, RA-RNTI, is obtained by a following formula: 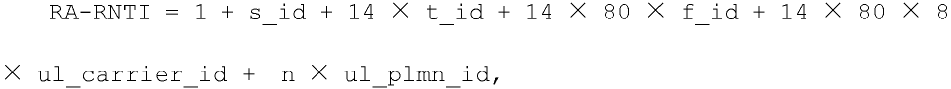 RA-RNTI = 1 + s_id + 14 × t_id + 14 × 80 × f_id + 14 × 80 × 8 × ul_carrier_id + n × ul_plmn_id,
where s_id is an index of a first orthogonal frequency division multiplexing symbol of a physical random access channel; t_id is an index of a first time slot of the physical random access channel in a system frame; f_id is an index of a frequency domain in which the physical random access channel is located; ul_carrier_id is 0 when the user equipment selects the uplink, and 1 when the user equipment selects the supplementary uplink; n is a positive integer, ul_plmn_id is a non-negative integer, and ul_plmn_ids corresponding to different operators are different from each other, where 0≤s_id<14, 0≤t_id<80, and 0≤f_id<8.

15. A computer-readable recording medium having computer-executable instructions stored thereon that, the computer-executable instructions, when executed by a shared carrier base station, causing the shared carrier base station to perform the user equipment access method according to any of claims 1 to 4, or when executed by a user equipment, causing the user equipment to perform the user equipment access method according to any of claims 9 to 11.

## Patentansprüche

1. Benutzergerätzugriffsverfahren für eine Basisstation mit gemeinsamem Träger, wobei ein Träger der Basisstation (3) mit gemeinsamem Träger von zwei oder mehr Betreibern gemeinsam genutzt wird, und ein Link für eine Uplink-Übertragung der Basisstation mit gemeinsamem Träger einen Uplink, UL, und einen ergänzenden Uplink, SUL, umfasst, wobei das Benutzergerätzugriffsverfahren Folgendes umfasst:
Aussenden eines Referenzsignalempfangsleistungsschwellenwerts und eines Parameterwerts durch die Basisstation mit gemeinsamem Träger an ein Benutzergerät, wobei der Referenzsignalempfangsleistungsschwellenwert und der Parameterwert einem Betreiber entsprechen, zu dem das Benutzergerät gehört, und der Parameterwert zum Berechnen einer temporären Identität (S401) eines Zufallszugriffsfunknetzwerks dient;
Aussenden einer Zufallszugriffsantwort, die unter Verwendung der basierend auf dem Parameterwert berechneten temporären Identität des Zufallszugriffsfunknetzwerks verwürfelt ist, durch die Basisstation mit gemeinsamem Träger an das Benutzergerät als Antwort auf eine Zufallszugriffsanforderung von dem Benutzergerät (S405); und
Herstellen einer Funkressourcensteuerungsverbindung mit dem Benutzergerät durch die Basisstation mit gemeinsamem Träger als Antwort auf eine Funkressourcensteuerungs-, RRC-, Verbindungsanforderung von dem Benutzergerät (S409).

2. Benutzergerätzugriffsverfahren nach Anspruch 1, wobei die Basisstation (3) mit gemeinsamem Träger das Benutzergerät informiert, eine Referenzsignalempfangsleistung zu messen.

3. Benutzergerätzugriffsverfahren nach Anspruch 1, wobei der Betreiber, zu dem das Benutzergerät gehört, identifiziert wird durch eine Public-Land-Mobile-Network-, PLMN-, Kennung, und die Basisstation mit gemeinsamem Träger den Referenzsignalempfangsleistungsschwellenwert und den Parameterwert zusammen mit der PLMN-Kennung, die dem Referenzsignalempfangsleistungsschwellenwert und dem Parameterwert entspricht, an das Benutzergerät überträgt.

4. Benutzergerätzugriffsverfahren nach Anspruch 1, wobei:
in einem Fall, in dem der Parameterwert zum Berechnen der temporären Identität des Zufallszugriffsfunknetzwerks auf ul_plmn_id eingestellt ist, wird die temporäre Identität des Zufallszugriffsfunknetzwerks, RA-RNTI, durch eine folgende Formel erhalten: 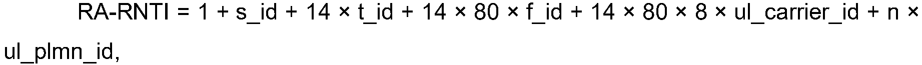 RA-RNTI = 1 + s_id + 14 × t_id + 14 × 80 × f_id + 14 × 80 × 8 × ul_carrier_id + n × ul_plmn_id,
wobei s_id ein Index eines ersten orthogonalen Frequenzmultiplexsymbols eines physikalischen Zufallszugriffskanals ist; t_id ein Index eines ersten Zeitslots des physikalischen Zufallszugriffskanals in einem Systemframe ist; f_id ein Index eines Frequenzbereichs ist, in dem der physikalische Zufallszugriffskanal lokalisiert ist;
ul_carrier_id 0 ist, wenn das Benutzergerät den Uplink auswählt, und 1, wenn das Benutzergerät den ergänzenden Uplink auswählt; n eine positive ganze Zahl ist, ul_plmn_id eine nicht-negative ganze Zahl ist, und ul_plmn_ids, die den verschiedenen Betreibern entsprechen, voneinander verschieden sind, wobei 0 ≤ s_id < 14, 0 ≤ t_id < 80 und 0 ≤ f_id < 8.

5. Basisstation mit gemeinsamem Träger, wobei ein Träger der Basisstation mit gemeinsamem Träger von zwei oder mehr Betreibern gemeinsam genutzt wird, und ein Link für eine Uplink-Übertragung der Basisstation mit gemeinsamem Träger einen Uplink, UL, und einen ergänzenden Uplink, SUL, umfasst, wobei die Basisstation mit gemeinsamem Träger Folgendes umfasst:
einen Speicher, der darauf gespeicherte Anweisungen aufweist; und
einen Prozessor, der ausgebildet ist, um die im Speicher gespeicherten Anweisungen auszuführen, um die Basisstation mit gemeinsamem Träger zu Folgendem zu veranlassen:
Aussenden eines Referenzsignalempfangsleistungsschwellenwerts und eines Parameterwerts an ein Benutzergerät, wobei der Referenzsignalempfangsleistungsschwellenwert und der Parameterwert einem Betreiber entsprechen, zu dem das Benutzergerät gehört, und der Parameterwert zum Berechnen einer temporären Identität eines Zufallszugriffsfunknetzwerks dient;
Aussenden einer Zufallszugriffsantwort, die unter Verwendung der basierend auf dem Parameterwert berechneten temporären Identität des Zufallszugriffsfunknetzwerks verwürfelt ist, an das Benutzergerät als Antwort auf eine Zufallszugriffsanforderung von dem Benutzergerät; und
Herstellen einer Funkressourcensteuerungsverbindung mit dem Benutzergerät als Antwort auf eine Funkressourcensteuerungs-, RRC-, Verbindungsanforderung von dem Benutzergerät.

6. Basisstation mit gemeinsamem Träger nach Anspruch 5, wobei der Prozessor ausgebildet ist, um die im Speicher gespeicherten Anweisungen auszuführen, um die Basisstation mit gemeinsamem Träger zu veranlassen, das Benutzergerät zu informieren, Referenzsignalempfangsleistung zu messen.

7. Basisstation mit gemeinsamem Träger nach Anspruch 5, wobei:
der Betreiber, zu dem das Benutzergerät gehört, identifiziert wird durch eine Public-Land-Mobile-Network-, PLMN-, Kennung, und
der Prozessor ausgebildet ist, um die im Speicher gespeicherten Anweisungen auszuführen, um die Basisstation mit gemeinsamem Träger zu veranlassen, den Referenzsignalempfangsleistungsschwellenwert und den Parameterwert zusammen mit der PLMN-Kennung, die dem Referenzsignalempfangsleistungsschwellenwert und dem Parameterwert entspricht, an das Benutzergerät auszusenden.

8. Basisstation mit gemeinsamem Träger nach Anspruch 5, wobei:
in einem Fall, in dem der Parameterwert zum Berechnen der temporären Identität des Zufallszugriffsfunknetzwerks auf ul_plmn_id eingestellt ist, wird die temporäre Identität des Zufallszugriffsfunknetzwerks, RA-RNTI, durch eine folgende Formel erhalten: 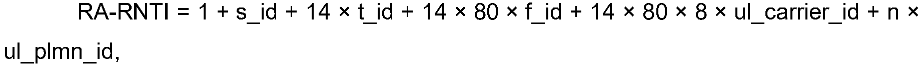 RA-RNTI = 1 + s_id + 14 × t_id + 14 × 80 × f_id + 14 × 80 × 8 × ul_carrier_id + n × ul_plmn_id,
wobei s_id ein Index eines ersten orthogonalen Frequenzmultiplexsymbols eines physikalischen Zufallszugriffskanals ist; t_id ein Index eines ersten Zeitslots des physikalischen Zufallszugriffskanals in einem Systemframe ist; f_id ein Index eines Frequenzbereichs ist, in dem der physikalische Zufallszugriffskanal lokalisiert ist; ul_carrier_id 0 ist, wenn das Benutzergerät den Uplink auswählt, und 1, wenn das Benutzergerät den ergänzenden Uplink auswählt; n eine positive ganze Zahl ist, ul_plmn_id eine nicht-negative ganze Zahl ist, und ul_plmn_ids, die den verschiedenen Betreibern entsprechen, voneinander verschieden sind, wobei 0 ≤ s_id < 14, 0 ≤ t_id < 80 und 0 ≤ f_id < 8.

9. Benutzergerätzugriffsverfahren für eine Basisstation mit gemeinsamem Träger, wobei ein Träger der Basisstation (3) mit gemeinsamem Träger von zwei oder mehr Betreibern gemeinsam genutzt wird, und ein Link für eine Uplink-Übertragung der Basisstation mit gemeinsamem Träger einen Uplink, UL, und einen ergänzenden Uplink, SUL, umfasst, wobei das Benutzergerätzugriffsverfahren Folgendes umfasst:
Empfangen eines Referenzsignalempfangsleistungsschwellenwerts und eines Parameterwerts, die von der Basisstation (3) mit gemeinsamem Träger ausgesendet werden, durch ein Benutzergerät, wobei der Referenzsignalempfangsleistungsschwellenwert und der Parameterwert einem Betreiber entsprechen, zu dem das Benutzergerät gehört, und der Parameterwert zum Berechnen einer temporären Identität (S601) eines Zufallszugriffsfunknetzwerks dient;
Messen einer Referenzsignalempfangsleistung, Vergleichen eines gemessenen Referenzsignalempfangsleistungswerts mit dem von der Basisstation mit gemeinsamem Träger empfangenen Referenzsignalempfangsleistungsschwellenwert, und Bestimmen, ob eine Zufallszugriffsanforderung in dem Uplink oder dem ergänzenden Uplink ausgesendet werden soll, gemäß einem Vergleichsergebnis (S603), durch das Benutzergerät;
Überwachen einer Zufallszugriffsantwort von der Basisstation mit gemeinsamem Träger, und Entwürfeln der Zufallszugriffsantwort unter Verwendung der basierend auf dem durch den empfangenen Parameterwert berechneten temporären Identität des Zufallszugriffsfunknetzwerks (S605), durch das Benutzergerät; und
Herstellen einer Funkressourcensteuerungsverbindung mit der Basisstation mit gemeinsamem Träger gemäß den entwürfelten Zugriffsinformationen (S607) durch das Benutzergerät.

10. Benutzergerätzugriffsverfahren nach Anspruch 9, wobei:
das Benutzergerät die Referenzsignalempfangsleistung als Antwort auf eine Anweisung von der Basisstation mit gemeinsamem Träger (3) misst; oder
das Benutzergerät die Referenzsignalempfangsleistung als Antwort auf Empfangen des Referenzsignalempfangsleistungsschwellenwerts und des Parameterwerts misst, die von der Basisstation mit gemeinsamem Träger (3) ausgesendet werden.

11. Benutzergerätzugriffsverfahren nach Anspruch 9, wobei:
der Betreiber, zu dem das Benutzergerät gehört, identifiziert wird durch eine Public-Land-Mobile-Network-, PLMN-, Kennung, und das Benutzergerät den Referenzsignalempfangsleistungsschwellenwert und den Parameterwert, die der eigenen PLMN-Kennung entsprechen, von der Basisstation mit gemeinsamem Träger empfängt; oder
das Benutzergerät in dem Uplink die Zufallszugriffsanforderung in einem Fall überträgt, in dem der gemessene Referenzsignalempfangsleistungswert größer oder gleich dem von der Basisstation mit gemeinsamem Träger empfangenen Referenzsignalempfangsleistungsschwellenwert ist; und das Benutzergerät in dem ergänzenden Uplink die Zufallszugriffsanforderung in einem Fall überträgt, in dem der gemessene Referenzsignalempfangsleistungswert kleiner ist als der von der Basisstation mit gemeinsamem Träger empfangene Referenzsignalempfangsleistungsschwellenwert; oder
in einem Fall, in dem der Parameterwert zum Berechnen der temporären Identität des Zufallszugriffsfunknetzwerks auf ul_plmn_id eingestellt ist, wird die temporäre Identität des Zufallszugriffsfunknetzwerks, RA-RNTI, durch eine folgende Formel erhalten: 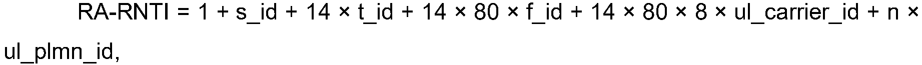 RA-RNTI = 1 + s_id + 14 × t_id + 14 × 80 × f_id + 14 × 80 × 8 × ul_carrier_id + n × ul_plmn_id,
wobei s_id ein Index eines ersten orthogonalen Frequenzmultiplexsymbols eines physikalischen Zufallszugriffskanals ist; t_id ein Index eines ersten Zeitslots des physikalischen Zufallszugriffskanals in einem Systemframe ist; f_id ein Index eines Frequenzbereichs ist, in dem der physikalische Zufallszugriffskanal lokalisiert ist; ul_carrier_id 0 ist, wenn das Benutzergerät den Uplink auswählt, und 1, wenn das Benutzergerät den ergänzenden Uplink auswählt; n eine positive ganze Zahl ist, ul_plmn_id eine nicht-negative ganze Zahl ist, und ul_plmn_ids, die den verschiedenen Betreibern entsprechen, voneinander verschieden sind, wobei 0 ≤ s_id < 14, 0 ≤ t_id < 80 und 0 ≤ f_id < 8.

12. Benutzergerät für eine Basisstation mit gemeinsamem Träger, wobei ein Träger der Basisstation mit gemeinsamem Träger von zwei oder mehr Betreibern gemeinsam genutzt wird, und ein Link für eine Uplink-Übertragung der Basisstation mit gemeinsamem Träger einen Uplink, UL, und einen ergänzenden Uplink, SUL, umfasst, umfassend:
einen Speicher, der darauf gespeicherte Anweisungen aufweist; und
einen Prozessor, der ausgebildet ist, um die im Speicher gespeicherten Anweisungen auszuführen, um das Benutzergerät zu Folgendem zu veranlassen:
Empfangen eines Referenzsignalempfangsleistungsschwellenwerts und eines Parameterwerts, die von der Basisstation mit gemeinsamem Träger ausgesendet werden, wobei der Referenzsignalempfangsleistungsschwellenwert und der Parameterwert einem Betreiber entsprechen, zu dem das Benutzergerät gehört, und der Parameterwert zum Berechnen einer temporären Identität eines Zufallszugriffsfunknetzwerks dient;
Messen einer Referenzsignalempfangsleistung, Vergleichen eines gemessenen Referenzsignalempfangsleistungswerts mit dem von der Basisstation mit gemeinsamem Träger empfangenen Referenzsignalempfangsleistungsschwellenwert, und Bestimmen, ob eine Zufallszugriffsanforderung in dem Uplink oder dem ergänzenden Uplink ausgesendet werden soll, gemäß einem Vergleichsergebnis;
Überwachen einer Zufallszugriffsantwort von der Basisstation mit gemeinsamem Träger, und Entwürfeln der Zufallszugriffsantwort unter Verwendung der basierend auf dem durch den empfangenen Parameterwert berechneten temporären Identität des Zufallszugriffsfunknetzwerks; und
Herstellen einer Funkressourcensteuerungsverbindung mit der Basisstation mit gemeinsamem Träger gemäß den entwürfelten Zugriffsinformationen.

13. Benutzergerät nach Anspruch 12, wobei der Prozessor ausgebildet ist, um die im Speicher gespeicherten Anweisungen auszuführen, um das Benutzergerät zu Folgendem zu veranlassen:
Messen der Referenzsignalempfangsleistung als Antwort auf eine Anweisung von der Basisstation mit gemeinsamem Träger; oder
Messen der Referenzsignalempfangsleistung als Antwort auf Empfangen des Referenzsignalempfangsleistungsschwellenwerts und des Parameterwerts, die von der Basisstation mit gemeinsamem Träger ausgesendet werden.

14. Benutzergerät nach Anspruch 12, wobei:
der Betreiber, zu dem das Benutzergerät gehört, identifiziert wird durch eine Public-Land-Mobile-Network-, PLMN-, Kennung, und der Prozessor ausgebildet ist, um die im Speicher gespeicherten Anweisungen auszuführen, um das Benutzergerät zu veranlassen, den Referenzsignalempfangsleistungsschwellenwert und den Parameterwert, die der eigenen PLMN-Kennung entsprechen, von der Basisstation mit gemeinsamem Träger zu empfangen; oder
der Prozessor ausgebildet ist, um die im Speicher gespeicherten Anweisungen auszuführen, um das Benutzergerät zu Folgendem zu veranlassen: Aussenden der Zufallszugriffsanforderung in dem Uplink, in einem Fall, in dem der gemessene Referenzsignalempfangsleistungswert größer oder gleich dem von der Basisstation mit gemeinsamem Träger empfangenen Referenzsignalempfangsleistungsschwellenwert ist, und Aussenden der Zufallszugriffsanforderung in dem ergänzenden Uplink, in einem Fall, in dem der gemessene Referenzsignalempfangsleistungswert kleiner als der von der Basisstation mit gemeinsamem Träger empfangene Referenzsignalempfangsleistungsschwellenwert ist; oder
in einem Fall, in dem der Parameterwert zum Berechnen der temporären Identität des Zufallszugriffsfunknetzwerks auf ul_plmn_id eingestellt ist, wird die temporäre Identität des Zufallszugriffsfunknetzwerks, RA-RNTI, durch eine folgende Formel erhalten: 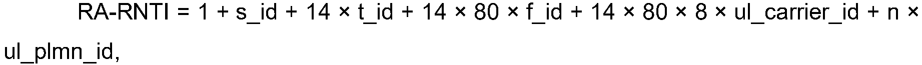 RA-RNTI = 1 + s_id + 14 × t_id + 14 × 80 × f_id + 14 × 80 × 8 × ul_carrier_id + n × ul_plmn_id,
wobei s_id ein Index eines ersten orthogonalen Frequenzmultiplexsymbols eines physikalischen Zufallszugriffskanals ist; t_id ein Index eines ersten Zeitslots des physikalischen Zufallszugriffskanals in einem Systemframe ist; f_id ein Index eines Frequenzbereichs ist, in dem der physikalische Zufallszugriffskanal lokalisiert ist; ul_carrier_id 0 ist, wenn das Benutzergerät den Uplink auswählt, und 1, wenn das Benutzergerät den ergänzenden Uplink auswählt; n eine positive ganze Zahl ist, ul_plmn_id eine nicht-negative ganze Zahl ist, und ul_plmn_ids, die den verschiedenen Betreibern entsprechen, voneinander verschieden sind, wobei 0 ≤ s_id < 14, 0 ≤ t_id < 80 und 0 ≤ f_id < 8.

15. Computerlesbares Aufzeichnungsmedium, das darauf gespeicherte computerausführbare Anweisungen aufweist, die, wobei die computerausführbaren Anweisungen, wenn von einer Basisstation mit gemeinsamem Träger ausgeführt, die Basisstation mit gemeinsamem Träger veranlassen, das Benutzergerätzugriffsverfahren nach einem der Ansprüche 1 bis 4 durchzuführen, oder, wenn von einem Benutzergerät ausgeführt, das Benutzergerät veranlassen, das Benutzergerätzugriffsverfahren nach einem der Ansprüche 9 bis 11 durchzuführen.

## Revendications

1. Procédé d'accès à un équipement utilisateur pour une station de base à porteuse partagée, dans lequel une porteuse de la station de base (3) à porteuse partagée est partagée par au moins deux opérateurs, et une liaison pour la transmission en liaison montante de la station de base à porteuse partagée comprend une liaison montante, UL, et une liaison montante supplémentaire, SUL, le procédé d'accès à un équipement utilisateur comprenant les étapes suivantes :
la station de base à porteuse partagée diffuse un seuil de puissance de réception de signal de référence et une valeur de paramètre vers un équipement utilisateur, dans lequel le seuil de puissance de réception de signal de référence et la valeur de paramètre correspondent à un opérateur auquel appartient l'équipement utilisateur, et la valeur de paramètre est destinée à calculer une identité temporaire de réseau radio d'accès aléatoire (S401) ;
la station de base à porteuse partagée diffuse une réponse d'accès aléatoire chiffrée en utilisant l'identité temporaire de réseau radio d'accès aléatoire calculée sur la base de la valeur de paramètre vers l'équipement utilisateur en réponse à une demande d'accès aléatoire émanant de l'équipement utilisateur (S405) ; et
la station de base à porteuse partagée établit une connexion de commande de ressources radio avec l'équipement utilisateur en réponse à une demande de connexion de commande de ressources radio, RRC, émanant de l'équipement utilisateur (S409).

2. Procédé d'accès à un équipement utilisateur selon la revendication 1, dans lequel la station de base (3) à porteuse partagée informe l'équipement utilisateur de la mesure d'une puissance de réception de signal de référence.

3. Procédé d'accès à un équipement utilisateur selon la revendication 1, dans lequel l'opérateur auquel appartient l'équipement utilisateur est identifié par un identifiant de réseau mobile terrestre public, PLMN, et la station de base à porteuse partagée diffuse le seuil de puissance de réception de signal de référence et la valeur de paramètre conjointement avec l'identifiant de PLMN correspondant au seuil de puissance de réception de signal de référence et à la valeur de paramètre vers l'équipement utilisateur.

4. Procédé d'accès à un équipement utilisateur selon la revendication 1, dans lequel :
dans un cas où la valeur du paramètre pour le calcul de l'identité temporaire de réseau radio d'accès aléatoire est définie comme ul_plmn_id, l'identité temporaire de réseau radio d'accès aléatoire, RA-RNTI, est obtenue par la formule suivante : 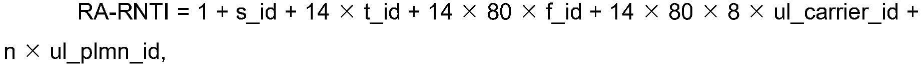 RA-RNTI = 1 + s_id + 14 × t_id + 14 × 80 × f_id + 14 × 80 × 8 × ul_carrier_id + n × ul_plmn_id,
où s_id est un indice d'un premier symbole de multiplexage par répartition en fréquence orthogonale d'un canal d'accès aléatoire physique ; t_id est un indice d'un premier créneau temporel du canal d'accès aléatoire physique dans une trame de système ; f_id est un indice d'un domaine de fréquence dans lequel le canal d'accès aléatoire physique est situé ;
ul_carrier_id est de 0 lorsque l'équipement utilisateur sélectionne la liaison montante, et de 1 lorsque l'équipement utilisateur sélectionne la liaison montante supplémentaire ; n est un nombre entier positif, ul_plmn_id est un nombre entier non négatif, et les ul_plmn_ids correspondant à différents opérateurs sont différents les uns des autres, où 0≤s_id<14, 0≤t_id<80, et 0≤f_id<8.

5. Station de base à porteuse partagée, dans laquelle une porteuse de la station de base à porteuse partagée est partagée par au moins deux opérateurs, et une liaison pour la transmission en liaison montante de la station de base à porteuse partagée comprend une liaison montante, UL, et une liaison montante supplémentaire, SUL, la station de base à porteuse partagée comprenant :
une mémoire sur laquelle des instructions sont stockées ; et
un processeur configuré pour exécuter les instructions stockées sur la mémoire pour amener la station de base à porteuse partagée à :
diffuser un seuil de puissance de réception de signal de référence et une valeur de paramètre vers un équipement utilisateur, dans laquelle le seuil de puissance de réception de signal de référence et la valeur de paramètre correspondent à un opérateur auquel appartient l'équipement utilisateur, et la valeur de paramètre est destinée à calculer une identité temporaire de réseau radio d'accès aléatoire ;
diffuser une réponse d'accès aléatoire chiffrée en utilisant l'identité temporaire de réseau radio d'accès aléatoire calculée sur la base de la valeur de paramètre vers l'équipement utilisateur en réponse à une demande d'accès aléatoire émanant de l'équipement utilisateur ; et
établir une connexion de commande de ressources radio avec l'équipement utilisateur en réponse à une demande de connexion de commande de ressources radio, RRC, émanant de l'équipement utilisateur.

6. Station de base à porteuse partagée selon la revendication 5, dans laquelle le processeur est configuré pour exécuter les instructions stockées sur la mémoire pour amener la station de base à porteuse partagée à informer l'équipement utilisateur de mesurer une puissance de réception de signal de référence.

7. Station de base à porteuse partagée selon la revendication 5, dans laquelle :
l'opérateur auquel appartient l'équipement utilisateur est identifié par un identifiant de réseau mobile terrestre public, PLMN, et
le processeur est configuré pour exécuter les instructions stockées sur la mémoire pour amener la station de base à porteuse partagée à diffuser le seuil de puissance de réception de signal de référence et la valeur de paramètre conjointement avec l'identifiant de PLMN correspondant au seuil de puissance de réception de signal de référence et à la valeur de paramètre vers l'équipement utilisateur.

8. Station de base à porteuse partagée selon la revendication 5, dans laquelle :
dans un cas où la valeur du paramètre pour le calcul de l'identité temporaire de réseau radio d'accès aléatoire est définie comme ul_plmn_id, l'identité temporaire de réseau radio d'accès aléatoire, RA-RNTI, est obtenue par la formule suivante : 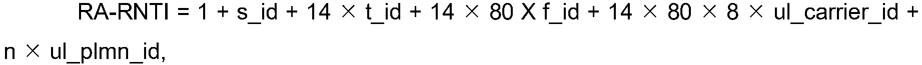 RA-RNTI = 1 + s_id + 14 × t_id + 14 × 80 X f_id + 14 × 80 × 8 × ul_carrier_id + n × ul_plmn_id,
où s_id est un indice d'un premier symbole de multiplexage par répartition en fréquence orthogonale d'un canal d'accès aléatoire physique ; t_id est un indice d'un premier créneau temporel du canal d'accès aléatoire physique dans une trame de système ; f_id est un indice d'un domaine de fréquence dans lequel le canal d'accès aléatoire physique est situé ;
ul_carrier_id est de 0 lorsque l'équipement utilisateur sélectionne la liaison montante, et de 1 lorsque l'équipement utilisateur sélectionne la liaison montante supplémentaire ; n est un nombre entier positif, ul_plmn_id est un nombre entier non négatif, et les ul_plmn_ids correspondant à différents opérateurs sont différents les uns des autres, où 0≤s_id<14, 0≤t_id<80, et 0≤f_id<8.

9. Procédé d'accès à un équipement utilisateur pour une station de base à porteuse partagée, dans lequel une porteuse de la station de base (3) à porteuse partagée est partagée par au moins deux opérateurs, et une liaison pour la transmission en liaison montante de la station de base à porteuse partagée comprend une liaison montante, UL, et une liaison montante supplémentaire, SUL, le procédé d'accès à un équipement utilisateur comprenant :
un équipement utilisateur recevant un seuil de puissance de réception de signal de référence et une valeur de paramètre qui sont diffusés par la station de base (3) à porteuse partagée, dans lequel le seuil de puissance de réception de signal de référence et la valeur de paramètre correspondent à un opérateur auquel appartient l'équipement utilisateur, et la valeur de paramètre est destinée à calculer une identité temporaire de réseau radio d'accès aléatoire (S601) ;
l'équipement utilisateur mesurant une puissance de réception de signal de référence, comparant une valeur de puissance de réception de signal de référence mesurée au seuil de puissance de réception de signal de référence reçu de la station de base à porteuse partagée, et déterminant s'il convient d'envoyer une demande d'accès aléatoire dans la liaison montante ou la liaison montante supplémentaire selon un résultat de comparaison (S603) ;
l'équipement utilisateur surveillant une réponse d'accès aléatoire émanant de la station de base à porteuse partagée, et déchiffrant la réponse d'accès aléatoire en utilisant l'identité temporaire de réseau radio d'accès aléatoire calculée par la valeur de paramètre reçue (S605) ; et
l'équipement utilisateur établissant une connexion de commande de ressources radio avec la station de base à porteuse partagée selon des informations d'accès déchiffrées (S607).

10. Procédé d'accès à un équipement utilisateur selon la revendication 9, dans lequel :
l'équipement utilisateur mesure la puissance de réception de signal de référence en réponse à une instruction émanant de la station de base (3) à porteuse partagée ; ou
l'équipement utilisateur mesure la puissance de réception de signal de référence en réponse à la réception du seuil de puissance de réception de signal de référence et de la valeur de paramètre qui sont diffusés par la station de base (3) à porteuse partagée.

11. Procédé d'accès à un équipement utilisateur selon la revendication 9, dans lequel :
l'opérateur auquel appartient l'équipement utilisateur est identifié par un identifiant de réseau mobile terrestre public, PLMN, et l'équipement utilisateur reçoit le seuil de puissance de réception de signal de référence et la valeur de paramètre qui correspondent à son propre identifiant de PLMN émanant de la station de base à porteuse partagée ; ou
l'équipement utilisateur envoie la demande d'accès aléatoire dans la liaison montante dans un cas où la valeur de puissance de réception de signal de référence mesurée est supérieure ou égale au seuil de puissance de réception du signal de référence reçu de la station de base à porteuse partagée ; et
l'équipement utilisateur envoie la demande d'accès aléatoire dans la liaison montante supplémentaire dans un cas où la valeur de puissance de réception de signal de référence mesurée est inférieure au seuil de puissance de réception de signal de référence reçu de la station de base à porteuse partagée ; ou
dans un cas où la valeur du paramètre pour le calcul de l'identité temporaire de réseau radio d'accès aléatoire est définie comme ul_plmn_id, l'identité temporaire de réseau radio d'accès aléatoire, RA-RNTI, est obtenue par la formule suivante : 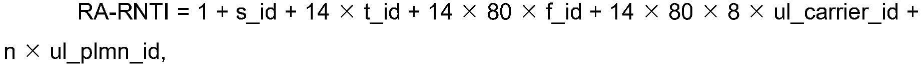 RA-RNTI = 1 + s_id + 14 × t_id + 14 × 80 × f_id + 14 × 80 × 8 × ul_carrier_id + n × ul_plmn_id,
où s_id est un indice d'un premier symbole de multiplexage par répartition en fréquence orthogonale d'un canal d'accès aléatoire physique ; t_id est un indice d'un premier créneau temporel du canal d'accès aléatoire physique dans une trame de système ; f_id est un indice d'un domaine de fréquence dans lequel le canal d'accès aléatoire physique est situé ;
ul_carrier_id est de 0 lorsque l'équipement utilisateur sélectionne la liaison montante, et de 1 lorsque l'équipement utilisateur sélectionne la liaison montante supplémentaire ; n est un nombre entier positif, ul_plmn_id est un nombre entier non négatif, et les ul_plmn_ids correspondant à différents opérateurs sont différents les uns des autres, où 0≤s_id<14, 0≤t_id<80, et 0≤f_id<8.

12. Équipement utilisateur pour une station de base à porteuse partagée, dans lequel une porteuse de la station de base à porteuse partagée est partagée par au moins deux opérateurs, et une liaison pour la transmission en liaison montante de la station de base à porteuse partagée comprend une liaison montante, UL, et une liaison montante supplémentaire, SUL, comprenant :
une mémoire sur laquelle des instructions sont stockées ; et
un processeur configuré pour exécuter les instructions stockées sur la mémoire pour amener l'équipement utilisateur à :
recevoir un seuil de puissance de réception de signal de référence et une valeur de paramètre qui sont diffusés par la station de base à porteuse partagée, dans lequel le seuil de puissance de réception de signal de référence et la valeur de paramètre correspondent à un opérateur auquel appartient l'équipement utilisateur, et la valeur de paramètre est destinée à calculer une identité temporaire de réseau radio d'accès aléatoire ;
mesurer une puissance de réception de signal de référence, comparer une valeur de puissance de réception de signal de référence mesurée au seuil de puissance de réception de signal de référence reçu de la station de base à porteuse partagée, et déterminer s'il convient d'envoyer une demande d'accès aléatoire dans la liaison montante ou la liaison montante supplémentaire selon un résultat de comparaison ;
surveiller une réponse d'accès aléatoire émanant de la station de base à porteuse partagée, et déchiffrer la réponse d'accès aléatoire en utilisant l'identité temporaire de réseau radio d'accès aléatoire calculée par la valeur de paramètre reçue ; et
établir une connexion de commande de ressources radio avec la station de base à porteuse partagée selon des informations d'accès déchiffrées.

13. Équipement utilisateur selon la revendication 12, dans lequel le processeur est configuré pour exécuter les instructions stockées sur la mémoire pour amener l'équipement utilisateur à :
mesurer la puissance de réception de signal de référence en réponse à une instruction émanant de la station de base à porteuse partagée ; ou
mesurer la puissance de réception de signal de référence en réponse à la réception du seuil de puissance de réception de signal de référence et de la valeur de paramètre qui sont diffusés par la station de base à porteuse partagée.

14. Équipement utilisateur selon la revendication 12, dans lequel :
l'opérateur auquel appartient l'équipement utilisateur est identifié par un identifiant de réseau mobile terrestre public, PLMN, et le processeur est configuré pour exécuter les instructions stockées sur la mémoire pour amener l'équipement utilisateur à recevoir le seuil de puissance de réception de signal de référence et la valeur de paramètre qui correspondent à son propre identifiant PLMN émanant de la station de base à porteuse partagée ; ou
le processeur est configuré pour exécuter les instructions stockées sur la mémoire pour amener l'équipement utilisateur à : envoyer la demande d'accès aléatoire dans la liaison montante dans un cas où la valeur de puissance de réception de signal de référence mesurée est supérieure ou égale au seuil de puissance de réception de signal de référence reçu de la station de base à porteuse partagée,
et envoyer la demande d'accès aléatoire dans la liaison montante supplémentaire dans un cas où la valeur de puissance de réception de signal de référence mesurée est inférieure au seuil de puissance de réception de signal de référence reçu de la station de base à porteuse partagée ; ou
dans un cas où la valeur du paramètre pour le calcul de l'identité temporaire de réseau radio d'accès aléatoire est définie comme ul_plmn_id, l'identité temporaire de réseau radio d'accès aléatoire, RA-RNTI, est obtenue par la formule suivante : 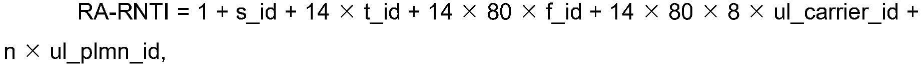 RA-RNTI = 1 + s_id + 14 × t_id + 14 × 80 × f_id + 14 × 80 × 8 × ul_carrier_id + n × ul_plmn_id,
où s_id est un indice d'un premier symbole de multiplexage par répartition en fréquence orthogonale d'un canal d'accès aléatoire physique ; t_id est un indice d'un premier créneau temporel du canal d'accès aléatoire physique dans une trame de système ; f_id est un indice d'un domaine de fréquence dans lequel le canal d'accès aléatoire physique est situé ; ul_carrier_id est de 0 lorsque l'équipement utilisateur sélectionne la liaison montante, et
de 1 lorsque l'équipement utilisateur sélectionne la liaison montante supplémentaire ; n est un nombre entier positif, ul_plmn_id est un nombre entier non négatif, et les ul_plmn_ids correspondant à différents opérateurs sont différents les uns des autres, où 0≤s_id<14, 0≤t_id<80, et 0≤f_id<8.

15. Support d'enregistrement lisible par ordinateur sur lequel des instructions exécutables par ordinateur sont stockées, les instructions exécutables par ordinateur, lorsqu'elles sont exécutées par une station de base à porteuse partagée, amenant la station de base à porteuse partagée à réaliser le procédé d'accès à un équipement utilisateur selon l'une quelconque des revendications 1 à 4, ou lorsqu'elles sont exécutées par un équipement utilisateur, amenant l'équipement utilisateur à réaliser le procédé d'accès à un équipement utilisateur selon l'une quelconque des revendications 9 à 11.
